# EUROPEAN PATENT APPLICATION

(11) **EP 4 345 659 A1**
(43) Date of publication of application: **03.04.2024**
(21) Application number: 23181726.3
(22) Date of filing: 27.06.2023
(51) Int. Cl.: G06F 21/10, H04L 9/40, H04W 12/08

(54) **DATA MANAGEMENT PROGRAM, DATA MANAGEMENT METHOD, AND DATA MANAGEMENT DEVICE**

(30) Priority: 30.09.2022 JP 2022158846
(71) Applicant: FUJITSU LIMITED, Kawasaki-shi, Kanagawa 211-8588 (JP)
(72) Inventor: Iguchi, Yasutaka, Kawasaki-shi, Kanagawa, 211-8588 (JP); Nakayama, Takayoshi, Kawasaki-shi, Kanagawa, 211-8588 (JP); Taka, Kenji, Kawasaki-shi, Kanagawa, 211-8588 (JP)
(74) Representative: Hoffmann Eitle

(57) **Abstract**

A data management program including instructions which, when executed by a computer, cause the computer to perform processing including: accepting, from another data management program among a plurality of data management programs that has accepted, from a data owner, a request for cancellation of consent to data sharing regarding the data sharing among the plurality of data management programs, consent identification information commonly issued to a set of data for which the data sharing has been consented and that is designated by the data owner when the consent to the data sharing is cancelled; and executing deletion of the data that corresponds to the consent identification information that matches the consent identification information accepted by the another data management program among pieces of the consent identification information associated with a data body managed by the data management program.

## Description

### FIELD

The embodiments discussed herein are related to a data management program, a data management method, and a data management device.

### BACKGROUND

From the viewpoint of planning measures and initiating new services and business, the spread of a data linkage infrastructure that links data held in a distributed manner by organizations of industry, government, and academia such as the nation, local public entities, and private companies has been promoted.

Merely as one example, when linkage of data such as personal data of an individual is executed between different organizations, the data is shared by the data manager of the linkage source and the data user of the linkage destination under the consent of the correct individual who is the data owner.

Japanese Laid-open Patent Publication No. 2022-75328, and Japanese National Publication of International Patent Application No. 2022-530829 are disclosed as related art.

### SUMMARY

### TECHNICAL PROBLEM

However, the above data linkage infrastructure has an aspect in which it is difficult to delete the linked data when the data owner cancels the consent. Merely as one case example, an example in which a data owner X cancels the consent to the data linkage with a data manager A in circumstances where data relating to the data owner X is shared with a data user B via the data manager A and a data manager C will be explained. In this case, the data user B as the linkage destination is not allowed to specify which piece of data among pieces of the data relating to the data owner X is data shared through the data manager A. For this reason, there can arise even situations in which all pieces of the data shared through the data manager A could not be deleted, or the data shared through the data manager C instead of the data manager A might be deleted.

In one aspect, an object of the embodiments is to provide a data management program, a data management method, and a data management device capable of implementing deletion of linked data when a data owner cancels the consent.

### SOLUTION TO PROBLEM

According to an aspect of the embodiments, there is provided a data management program including instructions which, when executed by a computer, cause the computer to perform processing including: accepting, from another data management program among a plurality of data management programs that has accepted, from a data owner, a request for cancellation of consent to data sharing regarding the data sharing among the plurality of data management programs, consent identification information commonly issued to a set of data for which the data sharing has been consented and that is designated by the data owner when the consent to the data sharing is cancelled; and executing deletion of the data that corresponds to the consent identification information that matches the consent identification information accepted by the another data management program among pieces of the consent identification information associated with a data body managed by the data management program.

### ADVANTAGEOUS EFFECTS OF INVENTION

Deletion of linked data when a data owner cancels the consent may be implemented.

### BRIEF DESCRIPTION OF DRAWINGS

FIG. 1 is a diagram illustrating a system configuration example;
FIG. 2 is a schematic diagram illustrating one example of data linkage;
FIG. 3 is a schematic diagram (1) illustrating one aspect of a problem;
FIG. 4 is a schematic diagram (2) illustrating one aspect of a problem;
FIG. 5 is a schematic diagram illustrating one aspect of a problem solving approach;
FIG. 6 is a block diagram illustrating a functional configuration example of a data linkage device;
FIG. 7 is a schematic diagram illustrating one example of an operation at the time of a deletion request;
FIG. 8 is a schematic diagram illustrating one example of an operation at the time of execution of deletion;
FIG. 9 is a sequence diagram illustrating a procedure of data sharing processing;
FIG. 10 is a sequence diagram illustrating a procedure of data deletion processing; and
FIG. 11 is a diagram illustrating a hardware configuration example.

### DESCRIPTION OF EMBODIMENTS

Hereinafter, embodiments of a data management program, a data management method, and a data management device according to the present application will be described with reference to the accompanying drawings. Each of the embodiments merely illustrates one example or aspect, and such exemplification does not limit numerical values, the range of functions, usage scenes, and the like. Then, the individual embodiments can be appropriately combined with each other within a range that does not cause contradiction between processing contents.

### [First Embodiment]

### <System Configuration>

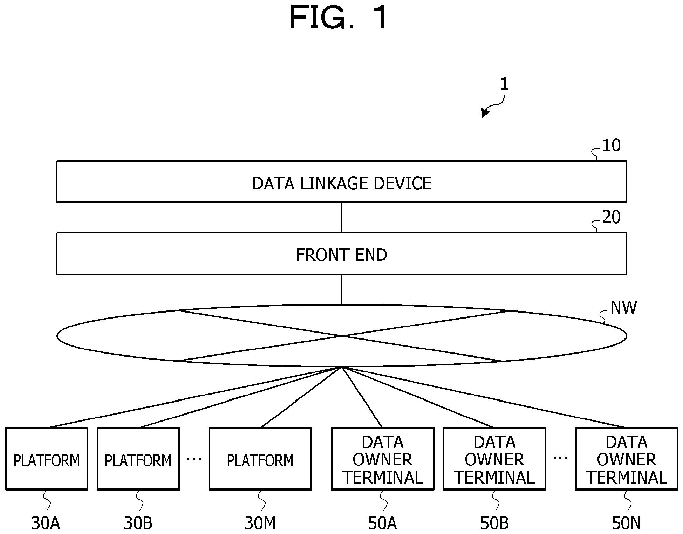

FIG. 1 is a diagram illustrating a system configuration example. As illustrated in FIG. 1, a system 1 can include a data linkage device 10, a front end 20, platforms 30A to 30M, and data owner terminals 50A to 50N. Hereinafter, the platforms 30A to 30M will be sometimes expressed by mentioning "platforms 30", and likewise, the data owner terminals 50A to 50N will be sometimes expressed by mentioning "data owner terminals 50".

The data linkage device 10 is a device that provides a data linkage infrastructure that links data held in a distributed manner by various organizations of industry, government, and academia such as the nation, local public entities, and private companies. The front end 20 provides a user interface relating to the data linkage infrastructure.

### These data linkage device 10 and front end 20

can provide each function as a cloud service by being implemented as a platform as a service (PaaS) type or software as a service (SaaS) type application. Additionally, the data linkage device 10 and the front end 20 also can be implemented as a server that provides each function on-premises. Note that, merely as an example, FIG. 1 will explain an example in which a web system is implemented by the data linkage device 10 corresponding to a back end and the front end 20, but the web system may be implemented as a web system in which both of these data linkage device 10 and front end 20 are integrated.

Such a front end 20 and the platforms 30 and the data owner terminals 50 can be coupled so as to be allowed to communicate via a network NW. For example, the network NW may be any type of communication network such as the Internet or a local area network (LAN) regardless of whether the network NW is wired or wireless.

The platform 30 is an infrastructure on which a solution, a service, an application, or the like provided by organizations participating in data linkage via the above data linkage infrastructure operates, such as a device or a system as an example.

Personal data can be included as one type of data managed by such platforms 30. The "personal data" mentioned here refers to the whole of attribute information or movement, behavior, and purchase histories on an individual, or information collected from a wearable device. For example, the personal data may include not only information capable of identifying a particular individual, which is so-called personal information, but also personal information accumulated in a database from the personal information, which is so-called individual data, and the like.

The data owner terminal 50 is a terminal device used by the data owner. The "data owner" mentioned here may refer to an individual corresponding to the personal data, merely as an example. For example, the data owner terminal 50 may be implemented by any information processing device such as a personal computer, a mobile terminal device, or a wearable terminal.

### <Data Linkage Infrastructure>

In the data linkage infrastructure, the data managed by each of the platforms 30A to 30M is managed in a distributed manner for each organization corresponding to one of the platforms 30A to 30M.

In more detail, in the data linkage infrastructure, agents corresponding to each organization corresponding to one of the platforms 30A to 30M operate for each organization. Such an agent corresponds to one example of a data management program, and the operating environment of the agent may be a virtual machine (VM) or a container that can be implemented by a virtualization technique, or a physical machine such as a server device. A computer such as the VM or the container, or the physical machine on which this data management program operates corresponds to one example of the data management device.

The agent can accept, via the front end 20, an application programming interface (API) request relating to operation of the data managed by the agent by itself, such as registration, update, or sharing as an example.

For example, when accepting the API request for data registration from the front end 20, the agent registers the data designated in the accepted API request, such as personal data managed by the platform 30 as an example, in a database or the like. The data registered in this manner can be updated by accepting the API request for data update.

Additionally, when accepting the API request for data sharing from the front end 20, the agent transmits the data designated in the accepted API request to the agent corresponding to the linkage destination designated in the accepted API request. The data transmitted in this manner is registered in a database of the agent at the linkage destination, whereby the data is shared between the organizations.

Hereinafter, a data linkage source (sharing source) among the organizations will be expressed by mentioning a "data manager", while a data linkage destination (sharing destination) will be sometimes expressed by mentioning a "data user".

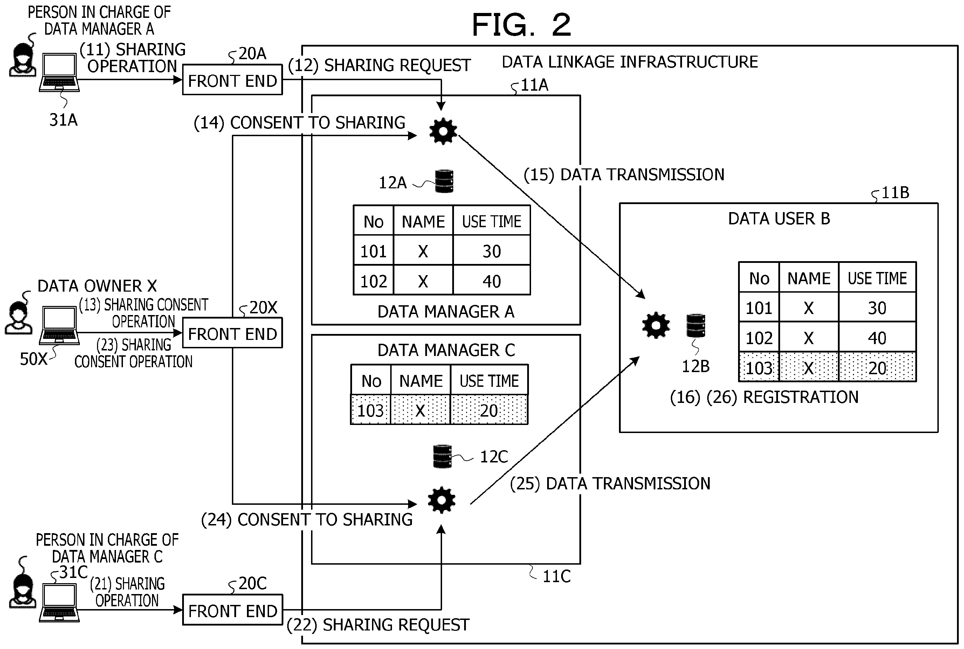

FIG. 2 is a schematic diagram illustrating one example of data linkage. Merely as an example, FIG. 2 will explain an example in which the data of a data owner X managed by an agent 11A of a data manager A and an agent 11C of a data manager C is shared with an agent 11B of a data user B.

As illustrated in FIG. 2, a front end 20A accepts a data sharing operation for sharing the data of the data owner X with the data user B, from a person in charge of the data manager A via a data manager terminal 31A (11). Then, the API request for data sharing is issued to the agent 11A of the data manager A from the front end 20A (12).

In response to the issuance of such an API request for data sharing, a front end 20X accepts, via a data owner terminal 50X, an operation for consenting to data sharing of sharing the data of the data owner X managed by the data manager A with the data user B (13). Then, the agent 11A of the data manager A is notified of the consent to the data sharing by the front end 20X (14).

When the consent to the data sharing is obtained in this manner, the agent 11A of the data manager A transmits the data of the data owner X among pieces of the data stored in a database 12A included in the agent 11A, to the agent 11B of the data user B (15).

Then, the agent 11B of the data user B registers the data of the data owner X transmitted by the agent 11A of the data manager A, in a database 12B (16).

For example, the database 12A stores a set of data in which a number, a name, and a use time correspond to each other. The "number" mentioned here refers to a number that identifies a piece of data. The "name" refers to a user name registered in an account of a service or the like provided by the platform 30A of the data manager A. The "use time" refers to a use time of a service or the like provided by the platform 30A of the data manager A. Such data is merely an example of the personal data and may include columns corresponding to other items relating to the personal data.

Here, FIG. 2 illustrates excerpted data relating to the data owner X among pieces of the data stored in the database 12A. In the state of the example illustrated in FIG. 2, the data of the data owner X stored in the database 12A, that is, the record data in two rows illustrated with solid background in white, is registered in the database 12B after being transmitted to the agent 11B.

In addition, a front end 20C accepts a data sharing operation for sharing the data of the data owner X with the data user B, from a person in charge of the data manager C via a data manager terminal 31C (21). Then, the API request for data sharing is issued to the agent 11C of the data manager C from the front end 20C (22).

In response to the issuance of such an API request for data sharing, the front end 20X accepts, via the data owner terminal 50X, an operation for consenting to data sharing of sharing the data of the data owner X managed by the data manager C with the data user B (23). Then, the agent 11C of the data manager C is notified of the consent to the data sharing by the front end 20X (24).

When the consent to the data sharing is obtained in this manner, the agent 11C of the data manager C transmits the data of the data owner X among pieces of the data stored in a database 12C included in the agent 11C, to the agent 11B of the data user B (25).

Then, the agent 11B of the data user B registers the data of the data owner X transmitted by the agent 11C of the data manager C, in the database 12B (26).

For example, FIG. 2 illustrates excerpted data relating to the data owner X among pieces of the data stored in the database 12C. In the state of the example illustrated in FIG. 2, the data of the data owner X stored in the database 12C, that is, the record data in one row illustrated with hatched background, is registered in the database 12B after being transmitted to the agent 11B.

As described above, as a result of the processing in (11) to (16), sharing of the data of the data owner X between the agents 11A and 11B, in different terms, data linkage between the data manager A and the data user B is implemented. Furthermore, as a result of the processing in (21) to (26), sharing of the data of the data owner X between the agents 11C and 11B, in different terms, data linkage between the data manager C and the data user B is implemented.

This allows the platform 30B of the data user B to use and exploit the data of the data owner X for the service or the like provided by the platform 30B, by referring to the database 12B of the agent 11B on the data linkage infrastructure. For example, the platform 30B can notify the data owner terminal 50X of a recommendation of a product or a service corresponding to the use time of a service or the like provided by the platform 30A or 30C.

### <One Aspect of Problem>

As one aspect, the data linkage infrastructure according to the existing technique described above in the background section has some characteristics that it is difficult to delete the linked data when the data owner cancels the consent.

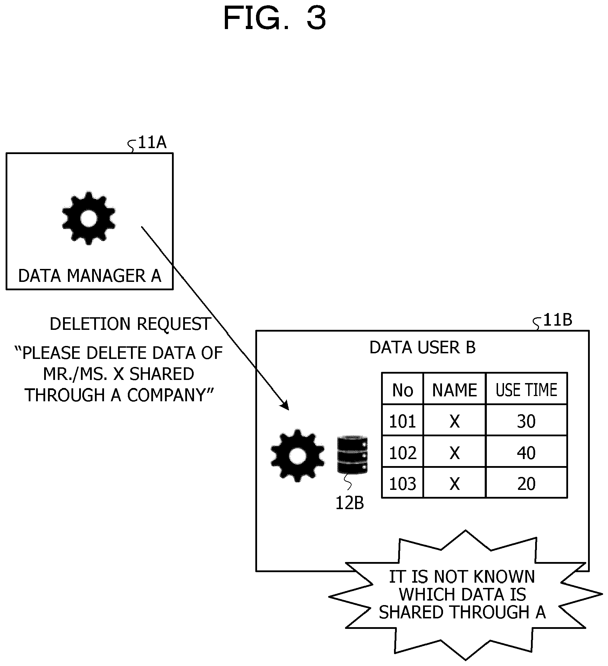

FIG. 3 is a schematic diagram (1) illustrating one aspect of a problem. Merely as an example, FIG. 3 will explain an example in which the agent 11A of the data manager A accepts the API request for cancelling the consent to linkage of the data of the data owner X via the front end 20X in the data sharing circumstances illustrated in FIG. 2. In this case, as illustrated in FIG. 3, the agent 11B of the data user B is notified of a deletion request for the data of the data owner X by the agent 11A of the data manager A.

However, the agent 11B of the data user B is not able to specify which data among the three pieces of record data with numbers "101" to "103" stored in the database 12B is data shared through the data manager A.

For this reason, in the agent 11B of the data user B, there can arise even situations in which all pieces of the data shared through the data manager A could not be deleted, or the data shared through the data manager C instead of the data manager A might be deleted.

As another aspect, the data linkage infrastructure according to the existing technique described above in the background section has some characteristics that an unauthorized deletion request in which the data manager does not have the authority to delete when the data owner cancels the consent could not be rejected.

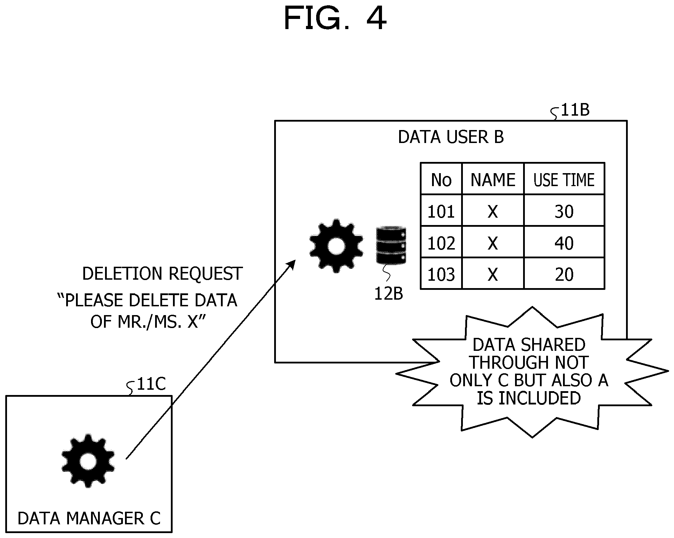

FIG. 4 is a schematic diagram (2) illustrating one aspect of a problem. Merely as an example, FIG. 4 will explain an example of a case where the agent 11B of the data user B is notified of the deletion request for deleting data of the data owner X by the agent 11C of the data manager C in the data sharing circumstances illustrated in FIG. 2. In this case, as illustrated in FIG. 4, the agent 11B of the data user B will intend to delete all three pieces of record data with the numbers "101" to "103" stored in the database 12B.

However, among the three pieces of record data with the numbers "101" to "103", only the record data with the number "103" is shared with the agent 11B of the data user B through the agent 11C of the data manager C, as described with reference to FIG. 2.

In other words, the data manager C has the valid authority to delete only the record data with the number "103" shared with the agent 11B of the data user B by the agent 11C of the data manager C.

From a different perspective, the data manager C does not have the authority to delete the two pieces of record data with the numbers "101" and "102" shared with the agent 11B of the data user B by the agent 11A of the data manager A.

For this reason, since the deletion request to be fulfilled by the agent 11C of the data manager C illustrated in FIG. 4 is a deletion request exceeding the deletion authority that the data manager C has, the deletion request has to be rejected by the agent 11B of the data user B as an unauthorized deletion request.

However, the agent 11B of the data user B is not able to distinguish between a record for which the agent 11C of the data manager C has the deletion authority and a record for which the agent 11C does not have the deletion authority, among pieces of the record data included in the database 12B. Therefore, the agent 11B of the data user B is not allowed to reject an unauthorized deletion request for which the data manager C does not have the deletion authority.

### <One Aspect of Problem Solving Approach>

Thus, in the data linkage infrastructure according to the present embodiment, management information is attached to the data managed by the agent. As one example of such management information, a consent identification (ID) commonly issued to a set of data for which a consent operation for data sharing has been accepted from the data owner at the time of data sharing can be mentioned.

By attaching such a consent ID to the data managed by the agent, the agent of the data user can specify, as an object intended to be deleted, data to which the consent ID that matches the consent ID whose designation has been accepted at the time of the consent cancellation operation by the data owner is attached.

The above management information may include a data owner name, agent names of the sharing source (transmission source) and the sharing destination (transmission destination) at the time of data sharing, and the like, as well as the consent ID. The "data owner name" mentioned here refers to a unique value registered by the front end at the time of creating a data owner. In addition, the "agent name" refers to a unique value registered when an agent is created in the data linkage infrastructure.

For example, by attaching the data owner name to the data managed by the agent, the agent of the data manager can collate the data owner name with which the consent cancellation operation has been performed, with the data owner name corresponding to the consent ID whose designation has been accepted at the time of the consent cancellation operation. This enables to determine whether or not the data owner performing the consent cancellation operation is a valid data owner having the deletion authority. In addition, by attaching the transmission destination at the time of data sharing to the data managed by the agent, the agent of the data manager can narrow down the transmission destination to which the data deletion request is to be transmitted, to the transmission destination of the data corresponding to the consent ID whose designation has been accepted at the time of the consent cancellation operation. Furthermore, by attaching the transmission source at the time of data sharing to the data managed by the agent, the agent of the data user can collate the agent name of the transmission source from which the data deletion request has been transmitted in response to the API request for consent cancellation, with the agent name of the transmission source associated with the consent ID whose designation has been accepted at the time of the consent cancellation operation. This enables to determine whether or not the data manager of the transmission source from which the data deletion request has been transmitted in response to the API request for consent cancellation is a valid data manager having the deletion authority.

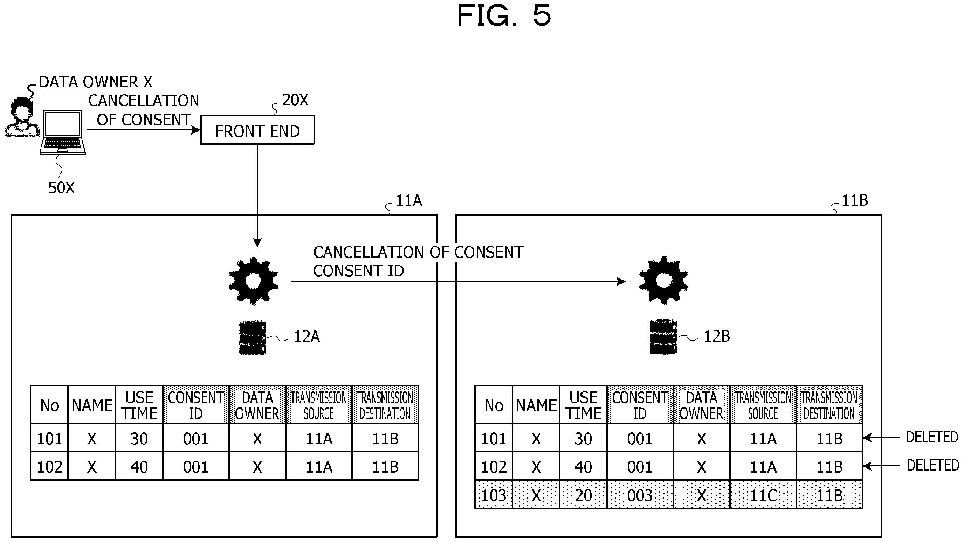

FIG. 5 is a schematic diagram illustrating one aspect of a problem solving approach. FIG. 5 will explain an example in which the agent 11A of the data manager A accepts the API request for cancelling the consent to linkage of the data with the consent ID "001" via the front end 20X in circumstances where the consent IDs are attached to the databases 12A and 12B illustrated in FIG. 2. In this case, as illustrated in FIG. 5, the data deletion request relating to the consent ID "001" is broadcast to other agents 11 including the agent 11B of the data user B from the agent 11A of the data manager A. At this time, by referring to the transmission destination "11B" associated with the consent ID "001" among the records included in the database 12A, the transmission destination of the data deletion request relating to the consent ID "001" also can be narrowed down to the agent 11B of the data user B. This enables to unicast the data deletion request relating to the consent ID "001" to the agent 11B of the data user B.

The agent 11B of the data user B that has accepted such a data deletion request can specify, as an object intended to be deleted, data to which the consent ID that matches the consent ID "001" whose designation has been accepted at the time of the consent cancellation operation by the data owner is attached. For example, in the state of the example illustrated in FIG. 5, among the records included in the database 12B, the records in the first and second rows having the consent ID "001", that is, the records with No "101" and "102" can be specified as objects intended to be deleted.

Therefore, according to the data linkage infrastructure according to the present embodiment, deletion of the linked data when the data owner cancels the consent may be implemented.

### <Configuration of Data Linkage Device>

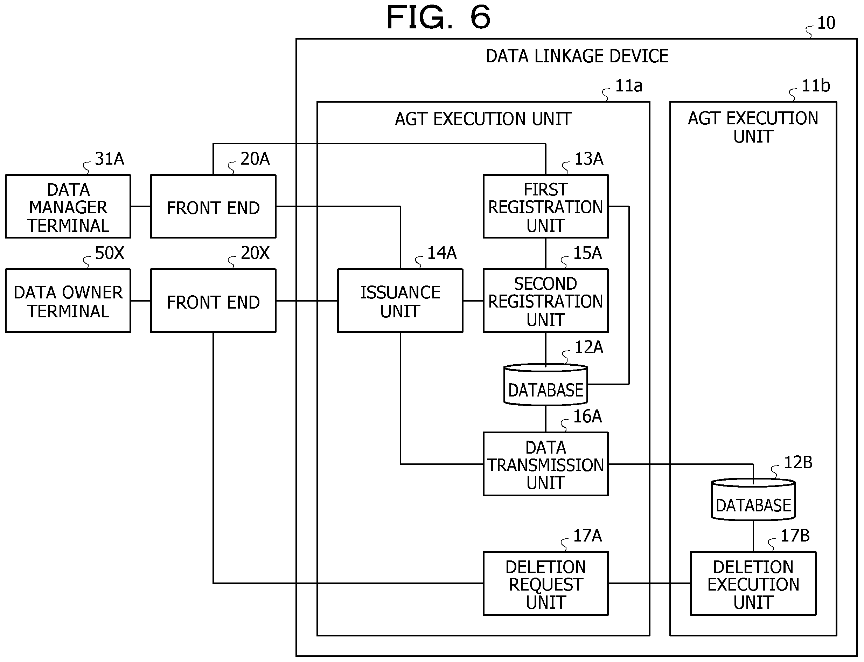

FIG. 6 is a block diagram illustrating a functional configuration example of the data linkage device 10. In FIG. 6, among the agents 11 included in the data linkage device 10, excerpted blocks corresponding to the functions of the agent 11A of the data manager A and excerpted blocks corresponding to the functions of the agent 11B of the data user B are schematically depicted. Note that FIG. 6 merely illustrates one aspect and does not exclude other agents apart from the agents 11A and 11B from being included in the data linkage device 10. In addition, the function as a data user is not excluded from being given to the agent 11A, and furthermore, the function as a data manager is not excluded from being given to the agent 11B.

As illustrated in FIG. 6, the data linkage device 10 includes an agent execution unit 11a and an agent execution unit 11b. Hereinafter, the agent execution unit 11a will be sometimes abbreviated as an "AGT execution unit 11a", and likewise, the agent execution unit 11b will be sometimes abbreviated as an "AGT execution unit 11b".

The AGT execution unit 11a is a processing unit that executes the agent 11A of the data manager A. The operating environment of such an agent 11A may be a VM, a container, or the like implemented by a virtualization technique, or may be a physical machine such as a server device, merely as an example.

As illustrated in FIG. 6, the AGT execution unit 11a includes a database 12A, a first registration unit 13A, an issuance unit 14A, a second registration unit 15A, a data transmission unit 16A, and a deletion request unit 17A.

The first registration unit 13A is a processing unit that registers a data body in the database 12A. Merely as an example, when accepting the API request for data registration from the data manager terminal 31A via the front end 20A, the first registration unit 13A registers the data designated in the accepted API request, such as personal data managed by the platform 30A as an example, in the database 12A. The data registered in this manner also can be updated by accepting the API request for data update.

The issuance unit 14A is a processing unit that issues the consent ID common to a set of data for which the consent operation for data sharing has been accepted from the data owner at the time of data sharing. Merely as an example, the issuance unit 14A issues a new consent ID when accepting the API request for data sharing of sharing the data of the data owner X with the data user B, from the data manager terminal 31A via the front end 20A. Merely as an example of such a new consent ID, identification information that can be uniquely identified from the consent IDs that have been numbered until then is numbered. After that, the issuance unit 14A transmits a consent request for requesting the consent to sharing the data of the data owner X managed by the data manager A with the data user B, to the data owner terminal 50X via the front end 20X. For example, the front end 20X can provide the data owner terminal 50X with data for use in displaying a consent request window including a graphical user interface (GUI) component that allows designation as to whether or not the data sharing is consented. Such data for use in displaying may include details of the data to be shared with the data user B, such as a list of records relating to the data owner X and the new consent ID as an example.

The second registration unit 15A is a processing unit that registers the management information to be attached to the data body, in the database 12A. As one aspect, when the data body is registered in the database 12A by the first registration unit 13A, the second registration unit 15A starts the processing as follows. That is, the second registration unit 15A registers the data owner name of the data body in the column for the data owner name in the record in which the data body is registered among the records included in the database 12A.

As another aspect, when the consent is obtained as an answer to the consent request for data sharing from the data owner terminal 50X, the second registration unit 15A starts the processing as follows. That is, the second registration unit 15A registers the new consent ID issued by the issuance unit 14A in the column for the consent ID in the record of the data owner X among the records included in the database 12A. Furthermore, the second registration unit 15A registers the data manager designated in the API request for data sharing, in the column for the transmission source in the record of the data owner X. Furthermore, the second registration unit 15A registers the data user designated in the API request for data sharing, in the column for the transmission destination in the record of the data owner X.

The data transmission unit 16A is a processing unit that transmits the data of the data owner X to the agent 11B of the data user B designated in the API request for data sharing when the consent is obtained from the data owner terminal 50X as an answer to the consent request for data sharing. In the AGT execution unit 11b to which the data of the data owner X has been transmitted in this manner, the data of the data owner X transmitted by the data transmission unit 16A is registered in the database 12B. Note that, when the dissent is obtained from the data owner terminal 50X as an answer to the consent request for data sharing, registration of the consent ID, the transmission source, and the transmission destination by the second registration unit 15A is not executed, and in addition, data transmission by the data transmission unit 16A is also not executed.

The deletion request unit 17A is a processing unit that transmits a data deletion request including the consent ID designated in the API request for cancelling the consent to the data linkage when accepting the API request for consent cancellation from the data owner terminal 50X via the front end 20X.

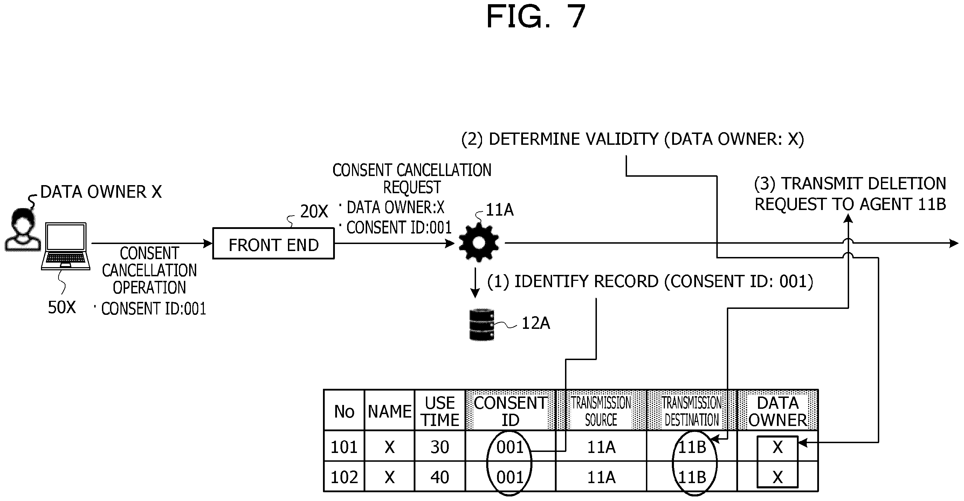

FIG. 7 is a schematic diagram illustrating one example of an operation at the time of the deletion request. FIG. 7 exemplifies a case where the front end 20X accepts, from the data owner terminal 50X, an input of declaration of intent to cancel the consent to the data linkage, such as a consent cancellation operation that designates the consent ID "001", the data manager "A", and the like intended to be cancelled, as an example, in circumstances similar to the data sharing illustrated in FIG. 5.

In this case, as illustrated in FIG. 7, the front end 20X transmits the API request for consent cancellation including the consent ID designated by the consent cancellation operation and the data owner name of the data owner performing the consent cancellation operation, to the agent 11A of the data manager A.

The agent 11A that has accepted this API request searches the records included in the database 12A for a record including the consent ID "001" designated in the accepted API request, thereby specifying a record intended to be deleted at the data sharing destination (1).

Then, by collating the value "X" in the column for the data owner name in the record specified as an object intended to be deleted at the data sharing destination, with the data owner name "X" included in the API request for consent cancellation, the agent 11A determines the validity of the data owner (2). In this case, since the two values match, it can be verified that the data owner performing the consent cancellation operation is a valid data owner having the deletion authority.

Thereafter, the agent 11A narrows down the transmission destination of the data deletion request relating to the consent ID "001" to the agent 11B, by referring to the value "11B" in the column for the transmission destination in the record specified as an object intended to be deleted at the data sharing destination in the above processing (1). After that, the agent 11A unicasts the data deletion request relating to the consent ID "001" to the agent 11B of the data user B (3).

This ensures that the agent 11B does not have to broadcast the data deletion request to other agents apart from the agent 11A at the time of transmitting the data deletion request.

Returning to the description of FIG. 6, the AGT execution unit 11b is a processing unit that executes the agent 11B of the data user B. The operating environment of such an agent 11B may also be a VM, a container, or the like implemented by a virtualization technique, or may be a physical machine such as a server device. As illustrated in FIG. 6, the AGT execution unit 11b includes a database 12B and a deletion execution unit 17B.

The deletion execution unit 17B is a processing unit that executes deletion of a record corresponding to the consent ID designated in the deletion request among the records included in the database 12B when accepting the data deletion request from the agent 11A.

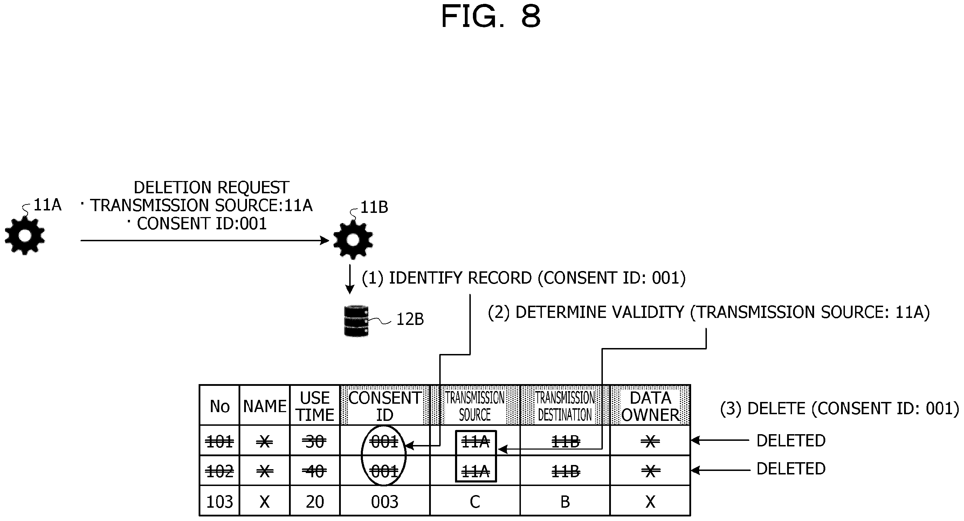

FIG. 8 is a schematic diagram illustrating one example of an operation at the time of execution of deletion. FIG. 8 exemplifies a case where the agent 11B of the data user B accepts a data deletion request relating to the consent ID "001" from the agent 11A of the data manager A in circumstances similar to the data sharing illustrated in FIG. 5.

In this case, the agent 11B of the data user B specifies the records in the first and second rows having the consent ID "001", that is, the records with No "101" and "102", from among the records included in the database 12B as objects intended to be deleted (1).

Then, by collating the agent name "11A" that is the transmission source of the data deletion request relating to the consent ID "001", with the value "11A" in the column for the transmission source in the record specified as an object intended to be deleted, the agent 11B of the data user B determines the validity of the data manager (2). In this case, since the two agent names match, it can be verified that the data manager of the transmission source from which the data deletion request has been transmitted in response to the API request for cancellation of consent is a valid data manager having the deletion authority.

After that, the agent 11B of the data user B deletes the records specified as objects intended to be deleted in the above processing (1), that is, the records in the first and second rows having the consent ID "001" (3). In this manner, deletion of the linked data when the data owner cancels the consent is implemented.

### <Processing Flow>

Next, a processing flow executed by the data linkage device 10 according to the present embodiment will be described. Here, (A) data sharing processing will be described, and then (B) data deletion processing will be described.

### Data Sharing Processing

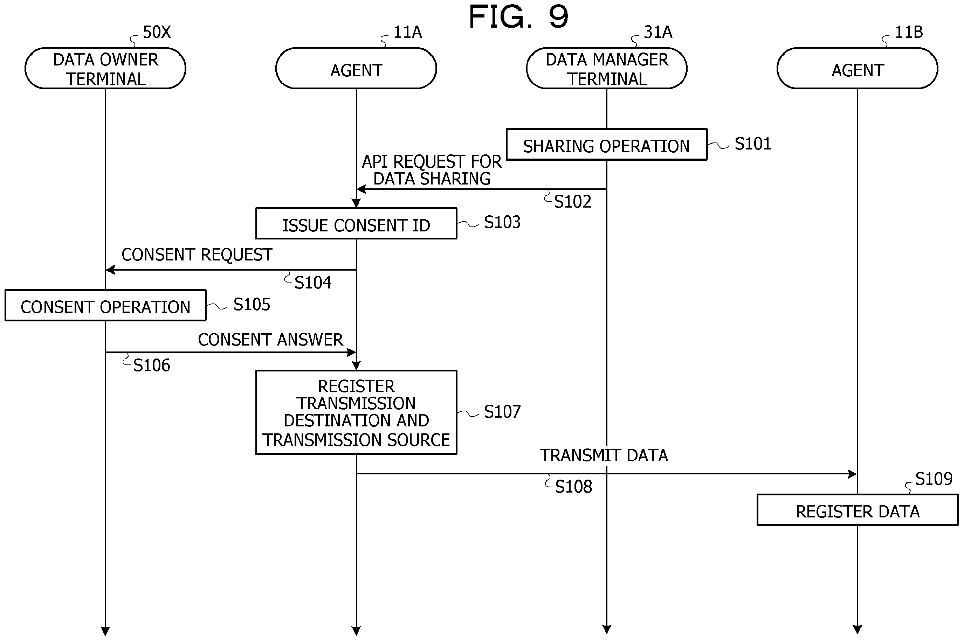

FIG. 9 is a sequence diagram illustrating a procedure of the data sharing processing. As illustrated in FIG. 9, the data manager terminal 31A accepts a data sharing operation for sharing the data of the data owner X with the data user B, from a person in charge of the data manager A (step S101). Then, the API request for data sharing is issued to the agent 11A of the data manager A from the front end 20A (step S102).

The agent 11A that has accepted the API request for data sharing in this manner issues a new consent ID that can be uniquely identified from the numbered consent IDs (step S103). After that, the agent 11A transmits the consent request for requesting the consent to sharing the data of the data owner X managed by the data manager A with the data user B, to the data owner terminal 50X via the front end 20X (step S104).

Subsequently, the data owner terminal 50X accepts a consent operation for consenting to data sharing, merely as an example of an answer to the consent request for data sharing (step S105). When the consent operation is accepted in this manner, the data owner terminal 50X transmits a consent answer for data sharing to the agent 11A of the data manager A via the front end 20X (step S106).

When the consent answer for data sharing is obtained from the data owner terminal 50X in this manner, the agent 11A of the data manager A registers the management information such as the consent ID, the transmission source, and the transmission destination in the record of the data owner X among the records included in the database 12A (step S107). That is, the new consent ID issued in step S103 is registered in the column for the consent ID. Furthermore, the data manager designated in the API request for data sharing is registered in the column for the transmission source, and likewise, the data user designated in the API request for data sharing is registered in the column for the transmission destination.

Then, the agent 11A of the data manager A transmits the data of the data owner X to the agent 11B of the data user B designated in the API request for data sharing (step S108).

The agent 11B of the data user B to which the data of the data owner X has been transmitted in this manner registers the data of the data owner X transmitted in step S108 in the database 12B (step S109) and ends the processing.

### (B) Data Deletion Processing

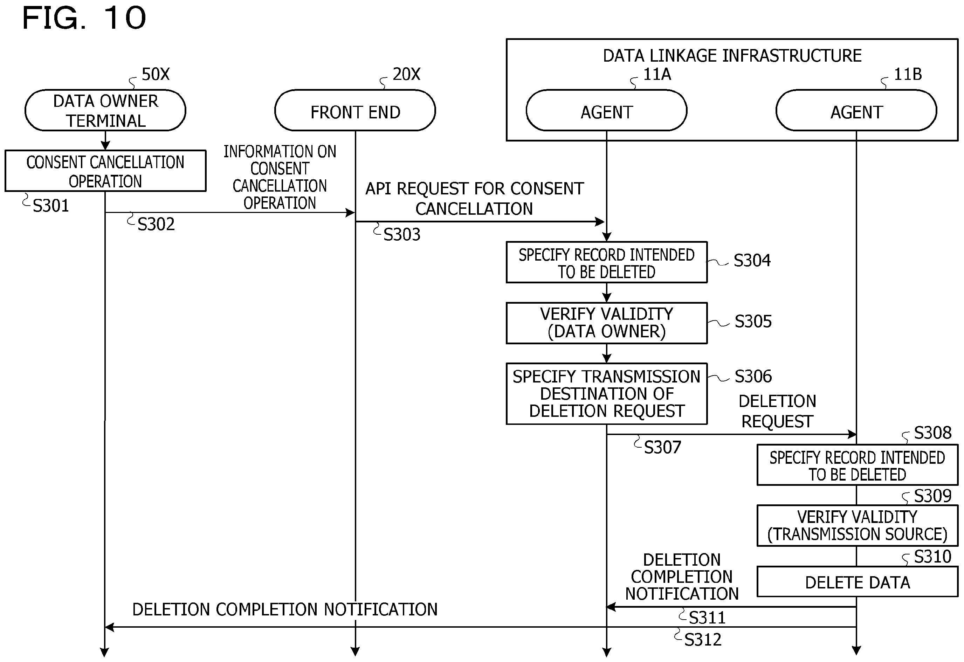

FIG. 10 is a sequence diagram illustrating a procedure of the data deletion processing. As illustrated in FIG. 10, the data owner terminal 50X accepts an input of declaration of intent to cancel the consent to the data linkage, which is a consent cancellation operation that designates the consent ID, the data manager, and the like intended to be canceled (step S301). Then, the front end 20X is notified of information on the consent cancellation operation accepted in step S301 by the data owner terminal 50X (step S302).

Then, the front end 20X transmits the API request for consent cancellation including the consent ID designated by the consent cancellation operation and the data owner name of the data owner performing the consent cancellation operation, to the agent 11A of the data manager A intended for consent cancellation (step S303).

The agent 11A that has accepted this API request searches the records included in the database 12A for a record including the consent ID designated in the API request, thereby specifying a record intended to be deleted at the data sharing destination (step S304).

Then, the agent 11A collates the value in the column for the data owner name in the record specified as an object intended to be deleted at the data sharing destination, with the data owner name included in the API request for consent cancellation to determine the validity of the data owner (step S305).

Thereafter, the agent 11A narrows down the transmission destination of the data deletion request to the agent 11B, by referring to the value in the column for the transmission destination in the record specified as an object intended to be deleted at the data sharing destination in step S304 (step S306). After that, the agent 11A unicasts the data deletion request relating to the consent ID specified in the API request to the agent 11B of the data user B (step S307).

The agent 11B of the data user B that has accepted this data deletion request specifies a record having the consent ID designated in the deletion request from among the records included in the database 12B as an object intended to be deleted (step S308).

Then, by collating the agent name that is the transmission source of the data deletion request relating to the consent ID, with the value in the column for the transmission source in the record specified as an object intended to be deleted, the agent 11B of the data user B determines the validity of the data manager (step S309).

Thereafter, the agent 11B of the data user B deletes the record specified as an object intended to be deleted in step S307 (step S310). After that, the agent 11B of the data user B transmits a deletion completion notification indicating that the deletion of the data corresponding to the consent cancellation operation has been completed, to the agent 11A of the data manager A and the data owner terminal 50X (steps S311 and S312), and ends the processing.

### <One Aspect of Effects>

As described above, in the data linkage infrastructure according to the present embodiment, the data to which the consent ID that matches the consent ID whose designation has been accepted with the consent cancellation operation by the data owner, by the agent 11B of the data user B that have accepted the data deletion request, is attached is specified as an object intended to be deleted. Therefore, according to the data linkage infrastructure according to the present embodiment, deletion of the linked data when the data owner cancels the consent may be implemented.

### [Second Embodiment]

Incidentally, while the embodiments relating to the disclosed device has been described above, the embodiments may be carried out in a variety of different forms apart from the embodiments described above. Thus, in the following, other embodiments included in the embodiments will be described.

### <Application Examples>

In the above first embodiment, an example in which cancellation of consent to the data linkage is designated in units of records of the database has been explained. However, cancellation of consent does not necessarily have to be designated in units of records. For example, a particular column of a record included in the records of the database also can be designated as an object intended for cancellation of consent. In this case, as a matter of course, only the data in the column designated as an object intended for cancellation of consent will be deleted from the record including the consent ID designated by the consent cancellation operation.

In the above first embodiment, an example in which one database is provided for one agent has been explained, but a plurality of databases may be provided for one agent. In this case, it goes without saying that the plurality of databases can be designated as objects intended for cancellation of consent to the data linkage.

In the above first embodiment, an example in which the personal data body and the management information are accumulated in a database as the same record has been explained, but the personal data body and the management information does not necessarily have to be accumulated in a database as the same record. For example, the management information may be saved independently of the personal data body in an associated condition with the record of the data body or a particular column in the record.

### <System>

Pieces of information including the processing procedure, control procedure, specific name, various types of data and parameters described above or illustrated in the drawings can be optionally modified unless otherwise noted.

In addition, each constituent member of each device illustrated in the drawings is functionally conceptual and does not necessarily have to be physically configured as illustrated in the drawings. That is, specific forms of distribution and integration of each device are not limited to those illustrated in the drawings. In other words, the whole or a part of each device can be configured by being functionally or physically distributed or integrated in optional units according to various loads, circumstances of use, or the like.

Furthermore, all or any part of processing functions individually performed in each device can be implemented by a central processing unit (CPU) and a program analyzed and executed by the CPU, or may be implemented as hardware by wired logic.

### <Hardware Configuration>

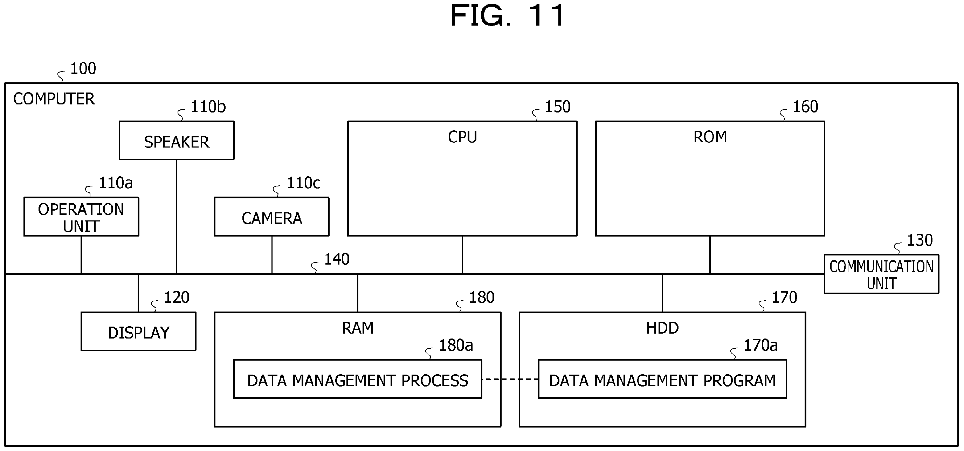

In addition, various types of processing described in the above embodiments can be implemented by executing a program prepared in advance in a computer such as a personal computer or a workstation. Thus, hereinafter, an example of a computer that executes a data management program having functions similar to the functions in the first and second embodiments will be described with reference to FIG. 11.

FIG. 11 is a diagram illustrating a hardware configuration example. As illustrated in FIG. 11, a computer 100 includes an operation unit 110a, a speaker 110b, a camera 110c, a display 120, and a communication unit 130. Furthermore, this computer 100 includes a CPU 150, a read-only memory (ROM) 160, a hard disk drive (HDD) 170, and a random access memory (RAM) 180. These units 110 to 180 are coupled to each other via a bus 140.

As illustrated in FIG. 11, the HDD 170 stores a data management program 170a that exhibits functions similar to the functions of the AGT execution unit 11a or the AGT execution unit 11b illustrated in the above first embodiment. This data management program 170a may be integrated or separated similarly to each constituent member of the AGT execution unit 11a or the AGT execution unit 11b illustrated in FIG. 6. That is, all pieces of data illustrated in the above first embodiment do not necessarily have to be stored in the HDD 170, and it is sufficient that data for use in processing is stored in the HDD 170.

Under such an environment, the CPU 150 reads the data management program 170a from the HDD 170 and then loads the read data management program 170a into the RAM 180. As a result, the data management program 170a functions as a data management process 180a as illustrated in FIG. 11. This data management process 180a loads various types of data read from the HDD 170 into an area assigned to the data management process 180a in the storage area included in the RAM 180 and executes various types of processing, using the various types of loaded data. For example, examples of the processing to be executed by the data management process 180a can include the processing illustrated in FIGs. 9 and 10 and the like. Note that all the processing units illustrated in the first embodiment described above do not necessarily have to operate in the CPU 150, and it is sufficient that a processing unit corresponding to processing intended to be executed is virtually implemented.

Note that the data management program 170a described above does not necessarily have to be stored in the HDD 170 or the ROM 160 previously. For example, the data management program 170a is stored in a "portable physical medium" to be inserted in the computer 100, such as a flexible disk, which is a so-called FD, a compact disc (CD)-ROM, a digital versatile disc (DVD) disk, a magneto-optical disk, or an integrated circuit (IC) card. Then, the computer 100 may acquire and execute the data management program 170a from those portable physical media. In addition, the data management program 170a is stored in another computer, a server device, or the like coupled to the computer 100 via a public line, the Internet, a LAN, a wide area network (WAN), or the like. The computer 100 may be caused to download the data management program 170a stored in this manner and then caused to execute the downloaded data management program 170a.

## Claims

1. A data management program including instructions which, when executed by a computer, cause the computer to perform processing comprising:
accepting, from another data management program among a plurality of data management programs that has accepted, from a data owner, a request for cancellation of consent to data sharing regarding the data sharing among the plurality of data management programs, consent identification information commonly issued to a set of data for which the data sharing has been consented and that is designated by the data owner when the consent to the data sharing is cancelled; and
executing deletion of the data that corresponds to the consent identification information that matches the consent identification information accepted by the another data management program among pieces of the consent identification information associated with a data body managed by the data management program.

2. The data management program according to claim 1, wherein
identification information on the data management device of a sharing source at a time of the data sharing is associated with the consent identification information,
the processing further includes collating the identification information on the data management device on which the another data management program is executed, with the identification information associated with the consent identification information that matches the consent identification information accepted by the another data management program.

3. The data management program according to claim 1, wherein the data body is personal data.

4. A data management method implemented by a computer, the data management method comprising:
accepting, from another data management program among a plurality of data management programs that has accepted, from a data owner, a request for cancellation of consent to data sharing regarding the data sharing among the plurality of data management programs, consent identification information commonly issued to a set of data for which the data sharing has been consented and that is designated by the data owner when the consent to the data sharing is cancelled; and
executing deletion of the data that corresponds to the consent identification information that matches the consent identification information accepted by the another data management program among pieces of the consent identification information associated with a data body managed by the data management program.

5. A data management apparatus comprising a control unit configured to perform processing including:
accepting, from another data management program among a plurality of data management programs that has accepted, from a data owner, a request for cancellation of consent to data sharing regarding the data sharing among the plurality of data management programs, consent identification information commonly issued to a set of data for which the data sharing has been consented and that is designated by the data owner when the consent to the data sharing is cancelled; and
executing deletion of the data that corresponds to the consent identification information that matches the consent identification information accepted by the another data management program among pieces of the consent identification information associated with a data body managed by the data management program.
